(19) Europäisches Patentamt
European Patent Office
Office européen des brevets

(11) EP 2 967 249 B1

(12) # EUROPEAN PATENT SPECIFICATION

(45) Date of publication and mention of the grant of the patent:
**04.08.2021 Bulletin 2021/31**

(21) Application number: **14768791.7**

(22) Date of filing: **12.03.2014**

(51) Int Cl.:
***A47J 31/00*** *(2006.01)*
***H05B 3/34*** *(2006.01)*
***A47J 31/54*** *(2006.01)*
***H05B 3/16*** *(2006.01)*
***F24H 1/10*** *(2006.01)*
***F24H 9/20*** *(2006.01)*
***F24C 7/04*** *(2021.01)*
***H05B 3/82*** *(2006.01)*

(86) International application number:
**PCT/US2014/023954**

(87) International publication number:
**WO 2014/150680 (25.09.2014 Gazette 2014/39)**

(54) **LIQUID HEATER INCLUDING WIRE MESH HEATING SEGMENT**
FLÜSSIGKEITSERHITZER MIT DRAHTGITTER-ERWÄRMUNGSSEGMENT
CHAUFFAGE DE LIQUIDE COMPRENANT UN SEGMENT DE CHAUFFAGE À TREILLIS MÉTALLIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201361801028 P**

(43) Date of publication of application:
**20.01.2016 Bulletin 2016/03**

(73) Proprietor: **De Luca Oven Technologies, LLC**
**San Francisco, California 94111 (US)**

(72) Inventor: **De Luca, Nicholas, P.**
**Carmel-by-the-Sea, CA 93921 (US)**

(74) Representative: **Dehns**
**St. Bride's House**
**10 Salisbury Square**
**London EC4Y 8JD (GB)**

(56) References cited:
**WO-A1-84/04698**
**AU-A- 2 321 370**
**DE-U1- 7 820 070**
**GB-A- 1 340 539**
**US-A- 2 140 516**
**US-A- 2 748 253**
**US-A- 4 292 504**
**US-A- 5 827 201**
**US-A1- 2010 189 897**
**US-A1- 2012 118 989**
**US-B1- 6 993 252**
**WO-A1-2012/092641**
**CN-A- 101 745 261**
**FR-A- 1 001 409**
**US-A- 1 754 580**
**US-A- 2 596 327**
**US-A- 3 560 706**
**US-A- 4 781 033**
**US-A- 6 080 973**
**US-A1- 2012 039 586**
**US-B1- 6 181 874**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 967 249 B1

## Description

## BACKGROUND OF THE INVENTION

Field of the Invention

Exemplary embodiments of the present invention relate to a liquid heater that includes a wire mesh segment. The wire mesh segment can include a Nichrome wire. Nichrome wire is commonly used in appliances such as hair dryers and toasters as well as used in embedded ceramic heaters. The wire has a high tensile strength and can easily operate at temperatures as high as 1250 degrees Celsius. Nichrome has the following physical properties (Standard ambient temperature and pressure used unless otherwise noted):

| Material property | Value | Units |
|---|---|---|
| Tensile Strength | $2.8 \times 10^{8}$ | Pa |
| Modulus of elasticity | $2.2 \times 10^{11}$ | Pa |
| Specific gravity | 8.4 | None |
| Density | 8400 | $kg/m^3$ |
| Melting point | 1400 | ° C. |
| Electrical resistivity at room temperature | $1.08 \times 10^{-6}$[1] | $\Omega \cdot m$ |
| Specific heat | 450 | J/kg° C. |
| Thermal conductivity | 11.3 | W/m/° C. |
| Thermal expansion | $14 \times 10^{-6}$ | m/m/° C. |

AU 2321370 discloses an electrode boiler that is arranged to compensate for a change in the conductivity of water as its temperature increases.

US 2748253 discloses a liquid heater with a number of solid carbon electrodes configured to heat water.

DE 7820070 discloses a heater for use with a radiator, the heater comprising heating elements that take the form of a circular arc.

US 6181874 discloses a liquid heater and and a liquid heater kit comprising the features of the preamble of independent claims 1 and 12.

## SUMMARY OF THE INVENTION

According to the invention, there is provided a liquid heater comprising the features as defined in independent claim 1 and a liquid heater kit comprising the features as defined in independent claim 12.

It is to be understood that both the foregoing general description and the following detailed description are exemplary and explanatory and are intended to provide further explanation of the invention as claimed. Other features and aspects will be apparent from the following detailed description, the drawings, and the claims.

## BRIEF DESCRIPTION OF THE FIGURES

The accompanying drawings, which are included to provide a further understanding of the invention and are incorporated in and constitute a part of this specification, illustrate embodiments of the invention, and together with the description serve to explain the principles of the invention.

The same reference number represents the same element on all drawings. It should be noted that the drawings are not necessarily to scale. The foregoing and other objects, aspects, and advantages are better understood from the following detailed description of an embodiment with reference to the drawings, in which:

FIG. 1 is a graph illustrating the radiative area of a mesh element as a function of the center to center spacing of the mesh strands.

FIG. 2 is a graph illustrating the electrical resistance of a mesh element as a function of the radius of the strand and the mesh spacing.

FIG. 3 is a graph illustrating the ramp up time of a two sided 125 mm×250 mm mesh element oven as a function

of the radius of the strand and the mesh spacing and power drain of 20 KW.

FIG. 4 is a composite graph of FIG. 1 and FIG. 2, indicating the regions applicable for high speed oven cooking with a De Luca Element Ratio close to 0.11 ohms/m2.

FIG. 5 illustrates a liquid heater including a wire mesh heating element according to various embodiments.

FIG. 6 illustrates a top down view of a liquid heater including a wire mesh heating element according to various embodiments.

FIG. 7 illustrates a bottom up view of a liquid heater including a wire mesh heating element according to various embodiments.

## DESCRIPTION

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention as defined in the appended claims to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present.

When considering the use of Nichrome within an oven it is important to consider not only the resistive characteristics but also the black body emission of the element when hot.

With Regard to the General Characterization of Resistive Elements, the resistance is proportional to the length and resistivity, and inversely proportional to the area of the conductor.

$$R = L / A \bullet \rho = L / A \bullet \rho_0(\alpha(T - T_0 ) + 1) \qquad \text{Eq.1}$$

where $\rho$ is the resistivity:

$$\rho = 1 / \sigma. ,$$

L is the length of the conductor, A is its cross-sectional area, T is its temperature, TO is a reference temperature (usually room temperature), $\rho$0 is the resistivity at T0, and $\alpha$ is the change in resistivity per unit of temperature as a percentage of pO. In the above expression, it is assumed that L and A remain unchanged within the temperature range. Also note that $\rho$0 and $\alpha$ are constants that depend on the conductor being considered. For Nichrome, $\rho$0 is the resistivity at 20 degrees C. or 1.10×10-6 and $\alpha$=0.0004. From above, the increase in radius of a resistive element by a factor of two will decrease the resistance by a factor of four; the converse is also true.

Regarding the power dissipated from a resistive element, where, I is the current and R is the resistance in ohms, v is the voltage across the element, from Ohm's law it can be seen that, since v=iR,

$$P=i^2R$$

In the case of an element with a constant voltage electrical source, such as a battery, the current passing through the element is a function of its resistance. Replacing R from above, and using ohms law,

$$P=v^2 / R=v^2A / \rho_0L \qquad \text{Eq. 2}$$

In the case of a resistive element such as a nichrome wire the heat generated within the element quickly dissipates as radiation cooling the entire element.

Now, Considering the Blackbody Characterization of the Element: Assuming the element behaves as a blackbody, the Stefan-Boltzmann equation characterizes the power dissipated as radiation:

$$W=\sigma \bullet A \bullet T^4 \qquad \text{Eq. 3}$$

Further, the wavelength λ, for which the emission intensity is highest, is given by Wien's Law as:

$$\lambda_{max} = b / T \qquad \text{Eq. 4}$$

0 Where,
σ is the Stefan-Boltzmann constant of $5.670\times10^{-8}$ W•$m^{-2}$•$K^{-4}$ and,
b is the Wien's displacement constant of 2.897×10-3 m•K.

In an application such as a cooking oven, requiring a preferred operating wavelength of 2 microns (2×10E-6) for maximum efficiency, the temperature of the element based on Wein's Law should approach 1400 degrees K. or 1127 degrees C. From the Stefan-Boltzmann equation, a small oven with two heating sides would have an operating surface area of approximately 4×0.25 m×0.25 m or 0.25 m2. Thus, W should approach 20,000 Watts for the oven.

In the case of creating a safe high power toaster or oven it is necessary for the system to operate at a low voltage of no more than 24 volts. Thus, using Eq. 2 with 20,000 W, the element will have a resistance of approximately 0.041 ohms, if 100% efficient at the operating temperature. Based on Eq. 1, a decrease in operating temperature to room temperature (from 1400 to 293 k) represents an approximate decrease in the resistivity of the element by about 1.44 times, and therefore an element whose resistance at room temperature is 0.0284 ohms is required.

Now, Considering the Relationship of the Resistance of the Element and the Characterization of the Element as a Blackbody:

The ratio of the resistance of the heater to the black body raditive area of the same heater becomes the critical design constraint for the oven; herein termed the De Luca Element Ratio. The ideal oven for foods operating over a 0.25 square meter area at 2 micron wavelength has a De Luca Element Ratio (at room temperature), of 0.1137 ohms/m2 (0.0284 ohms/0.25 m2). The De Luca Element Ratio is dependent solely on the resistance of the material and the radiative surface area but is independent of the voltage the system is operated. In addition, for wire, the length of the wire will not change the ratio.

Table 1 lists the resistance per meter of several common nichrome wire sizes as well as the De Luca Element Ratio for these elements. It is important to note that all these wires have a De Luca Element Ratio far greater than the 0.1137 required for an oven operated at 1400K, 24V, and over 0.25 m2. Clearly the use of a single wire with a voltage placed from end-to-end in order to achieve the power requirement is not feasible.

In contrast, a household pop-toaster, operated at 120V and 1500 W, over a smaller 0.338 m2 area at 500K would require a De Luca Element Ratio of 35.5. Thus a 1 meter nichrome wire of 0.001 m radius with a 120V placed across it would work appropriately.

TABLE 1

| Wire Radius (m) | Cross Sectional Area (m2) | Resistance Per Meter Length (ohms) | Surface Area of 1 meter length (m2) | Weight Per Meter (g) | De Luca Element Ratio (at room temp) | Time To Reach 1400 K At 20 kw (sec) |
|---|---|---|---|---|---|---|
| 0.01 | 3.14E-04 | 0.0034 | 0.0628 | 2637 | 0.1 | 65.4 |
| 0.0015 | 7.06E-06 | 0.15 | 0.00942 | 59.3 | 16.2 | 1.47 |
| 0.001 | 3.14E-06 | 0.30 | .00628 | 26.3 | 47.7 | 0.654 |
| .0005 | 7.85E-07 | 1.38 | .00314 | 6.6 | 438 | 0.163 |
| 0.000191 | 1.139E-07 | 11.60 | 0.00120 | 0.957 | 9670 | 0.024 |
| 0.000127 | 5.064E-08 | 24.61 | 0.00079 | 0.425 | 30856 | 0.010 |
| 0.000022 | 1.551E-09 | 771.21 | 0.000138 | 0.013 | 5580486 | 0.0003 |

Clearly a lower resistance or a higher surface area is required to achieve a De Luca Element Ratio of close to 0.1137.

One way to achieve the De Luca Ratio of 0.1137 would be to use a large element of 2 cm radius. The problem with this relates to the inherent heat capacity of the element. Note from Table 1 that to raise the temperature to 1400K from room temperature would require 65.4 seconds and thus about 0.36 KWH of energy.

This Calculation is Derived from the Equation Relating Heat Energy to Specific Heat Capacity, where the Unit Quantity is in Terms of Mass is:
$\Delta Q=mc\Delta T$
where ΔQ is the heat energy put into or taken out of the element (where P×time=ΔQ), m is the mass of the element, c

is the specific heat capacity, and ΔT is the temperature differential where the initial temperature is subtracted from the final temperature.

Thus, the time required to heat the element would be extraordinarily long and not achieve the goal of quick cooking times.

Another way for lowering the resistance is to place multiple resistors in parallel. Kirkoff's law's predict the cumulative result of resistors placed in parallel.

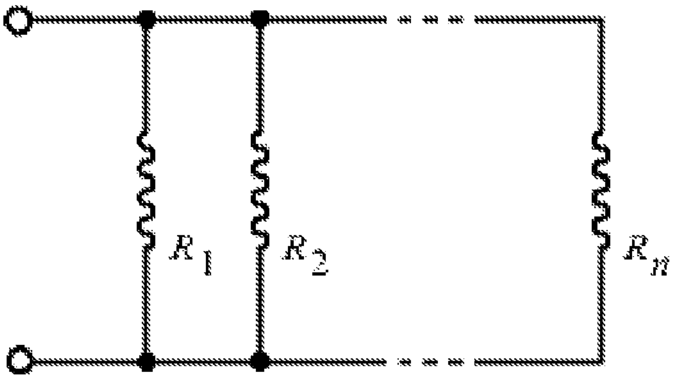


$$\frac{1}{R_{total}} = \frac{1}{R_1} + \frac{1}{R_2} + \dots + \frac{1}{R_n}$$

Eq. 5

The following Table 2 lists the number of conductors for each of the elements in Table 1, as derived using equation 5, that would need to be placed in parallel in order to achieve a De Luca Element Ratio of 0.1137. Clearly placing and distributing these elements evenly across the surface would be extremely difficult and impossible for manufacture. Also note that the required time to heat the combined mass of the elements to 1400K from room temperature at 20 KW for elements with a radius of greater than 0.0002 meters is too large with respect to an overall cooking time of several seconds.

TABLE 2

| **Wire Radius (m)** | **De Luca Element Ratio for single element (@ Room Temp)** | **Number of Parallel Elements Required to Achieve De Luca Ratio of 0.1137** | **Total Weight/ Meter (g)** | **Time To Reach 1400 K At 20 kw (sec) From Room Temp** |
|---|---|---|---|---|
| 0.01 | 0.1 | 1 | 2637 | 65.4 |
| 0.0015 | 16.2 | 12 | 711 | 17.6 |
| 0.001 | 47.7 | 22 | 579 | 14.4 |
| .0005 | 438 | 63 | 415 | 10.3 |
| 0.000191 | 9670 | 267 | 255 | 6.3 |
| 0.000127 | 30856 | 493 | 209 | 5.2 |
| 0.000022 | 5580486 | 6838 | 88 | 2.18 |

In summary, the following invention allows for the creation of a high power oven by using a resistive mesh element. The heater element designed so as to allow for the desired wavelength output by modifying both the thickness of the mesh as well as the surface area from which heat radiates. The heater consisting of a single unit mesh that is easily assembled into the oven and having a low mass so as to allow for a very quick heat-up (on the order of less than a few seconds).

Specifically, the wire mesh cloth design calibrated to have the correct De Luca Element Ratio for a fast response (less than 2 sec) oven application operating at 1400 degrees K.

According to exemplary embodiments, a mesh design for operating a quick response time oven consisting of

a nichrome wire mesh with strand diameter of 0.3 mm, and spacing between strands of 0.3 mm, and operating voltage of 24V.

In considering the best mesh design, it is important to evaluate the blackbody radiative area as well as the resistance of the element as a function of the following:

1) The number of strands per unit area of the mesh
2) The radius of the mesh strands
3) The mesh strand material
4) The potential for radiation occlusion between strands.

FIG. 1 describes the blackbody area as a function of the number of strands and the strand spacing of the mesh. Interestingly, the surface area is independent of the radius of the wire strand if the spacing is made a function of the radius.

Using equation 5 from above, the resistance of the mesh can be calculated for a specific wire strand radius. FIG. 2 illustrates the electrical resistance of a nichrome mesh element as a function of the radius of the strand and the mesh spacing. Limitation in Equation 5 become apparent as the number of strands becomes very high and the resistance becomes very low; thus atomic effects associated with random movement of electrons in the metal at room temperature form a minimum resistive threshold.

Using nichrome as the strand material in the mesh and operating the system at 20 KW, the ramp up time to achieve an operating temperature of 1400 degrees K. is a function of the strand radius and the mesh spacing (note that a nominal mesh size of two times 125 mm×250 mm is used). FIG. 3 illustrates the region below which a ramp up of less than 2 seconds is achievable (note that wire radius above 0.5 mm are not shown due to the long required ramp up times).

FIG. 4 is a composite graph of FIGS. 1 and 2, indicating the regions applicable for high speed oven cooking with a De Luca Element Ratio close to 0.11 ohms/m2.

A liquid heater according to the invention including a wire mesh segment wherein the liquid to be heated flows in the voids in the mesh, i.e., between the wire segments that form a wire mesh, is described. The liquid can be continuously heated as it flows. The liquid can be flash or instantly heated. As such, the present liquid heater can be disposed proximate or adjacent to a point of use or consumption.

Various embodiments that can raise the temperature of a liquid over a large range can be provided. Various embodiments that can raise the temperature of a large quantity of liquid can be provided. In some embodiments, multiple liquid heaters can be disposed in series, i.e., one after another in a conduit like a pipe. In some embodiments, multiple liquid heaters can be disposed in parallel conduits.

Each wire mesh segment or heating element can be individually controlled for intensity and/or duration. This embodiment can provide the advantage of heating or cooking with a high flow rate. In addition, the heating profile for each wire mesh segment can be optimally customized. The customization can be achieved without reconfiguring the hardware of the liquid heater.

Each length of a wire mesh segment and intervening gaps between lengths of the wire mesh segments can provide the equivalent effect of an on-and-off pulsed liquid heater. This can permit for a continuous process flow, for example, when showering, filling a tub, or otherwise demanding a liquid at a high rate of flow.

In some embodiments, a flow rate of the liquid runs at a constant speed. As the liquid to be heated flows forward, the wire mesh segments can heat the liquid. A wire mesh segment or heating element either may be already on or may turn on when a flow is detected. In the absence of a liquid flow, the wire mesh heating element can be turned off. As it flows, the liquid flow passes through the voids in the wire mesh segment and heats. In some embodiments, the spacing between the strands of wire forming the wire space can be covered or blocked. As such, when the spacing between the strands of wire forming the wire space is blocked or a wire mesh segment is not porous, the water flows along the surface of the wire mesh segment.

In some embodiments, after the liquid flows past a wire mesh element, the liquid can be cooled. A duration of a cool-off period can be achieved with a gap between adjacent wire mesh segments. In some embodiments, the wire mesh element includes a Ni-Chrome heating element.

According to the invention the wire mesh heater of a liquid heater is disposed in a conduit. In embodiments directed to a liquid heater kit according to the invention, the wire mesh heater can be integrated or be formed as a unitary construction. The conduit can include industry standard male or female fittings. As such, the heater can be disposed in plumbing, for example, household plumbing.

The conduit can include a leak proof nipple or fitting. Electrical leads connected to the wire mesh segment can exit from the conduit from the leak proof nipple. In some embodiments, shielding to reflect infrared radiation can be provided on an inner surface of a conduit in which a wire mesh heater is disposed.

The conduit can include one or more temperature sensors. In some embodiments, the temperature sensor can be disposed downstream of the water mesh heater. The temperature sensors can be disposed upstream of the water

mesh heater.

A controller that reads a temperature signal from a temperature sensor can be provided. The controller can limit the temperature of the heated liquid, for example, by turning off and on the DC power supply.

The conduit can include a liquid flow sensor. The flow sensor can enable the DC power supply when a flow is present. In some embodiments, the flow sensor signal the controller whether a liquid flow is present or not.

The conduit can include a label indicating the direction of the liquid flow.

A low-voltage Direct Current (DC) power supply to energize the water-heating element can be provided. Exemplary low voltages include 6 Volts (V), 12 V, 18 V, 24 V, and the like. The DC power supply can be a high-amperage power supply.

A liquid heater kit can include a conduit including a wire mesh segment and a DC power supply to be connected to the wire mesh segment. The kit can include a heat insulator disposed on an outer surface of the conduit. The kit can include a controller. The kit can include a flow sensor. The kit can include a temperature sensor.

FIG. 5 illustrates a liquid heater including a wire mesh heating element according to various embodiments. A liquid heater 100 can include a conduit 150. The conduit 150 can include threads 152. Disposed within the conduit 150 can be a wire mesh segment 114.

According to the invention, the wire mesh segment 114 has a conical shape. The generally conical surface of the wire mesh segment 114 can further include ridges or crests and dips or valleys to increase a surface area of the conical surface. For example, the ridges and dips can be formed in a sinusoidal shape. The ridges and dips can be disposed along a length of the wire mesh segment 114. In some embodiments, the ridges and dips can be disposed along a partial length of the wire mesh segment 114.

According to the invention a broad radius ring 110 of wire mesh segment 114 is disposed upstream of a narrow radius ring 112 along a flow 124. Electrical lead 120 can be connected to the broad ring 110. Electrical lead 122 can be connected to the narrow ring 112. In some embodiments, electrical lead 120 can be connected to a positive electrode of a DC power supply 128. In some embodiments, electrical lead 122 can be connected to a negative electrode of a DC power supply 128. In some embodiments, the negative electrode can be connected to the broad ring 110, and the positive electrode can be connected to the narrow ring 112.

Wire mesh segment 114 can be secured to conduit 150 near or through the broad ring 110 using, for example, a screw 116. Wire mesh segment 114 can be secured to conduit 500 near or through the narrow ring 112 using, for example, a screw 116. Other means known in the art can be used to secure the wire mesh segment 114 to conduit 150 using, for example, an adhesive, a rivet, using soldering, using brazing, using welding, and the like.

A controller 129 can receive a signal from a temperature sensor 124. Temperature sensor 124 can be disposed downstream of wire mesh segment 114. Temperature sensor 124 can measure the temperature of the heated liquid. The controller 129 can include an input that can set the max temperature of the heated liquid. The input can, for example, include a dial, a knob, or any other input means known in the art. The controller 129 can sense a temperature signal from the temperature sensor 124 and control the wire mesh segment 114 based on the max temperature input. In some embodiments, the controller 129 can enable an electrical connection between the wire mesh segment 114 and the power supply 128 when the temperature is below a max temperature. In some embodiments, the controller 129 can disable an electrical connection between the wire mesh segment 114 and the power supply 128 when the temperature is at or above a max temperature.

A controller 129 can receive a signal from a flow sensor 126. Flow sensor 126 can be disposed upstream of wire mesh segment 114. Temperature sensor 124 can measure a flow of the liquid, for example, the unheated liquid. The controller 129 can sense the signal from the flow sensor 126 and control the wire mesh segment 114, by enabling an electrical connection to the power 128 when a flow is sensed. In some embodiments, the controller 129 can disable an electrical connection between the power supply 128 and wire mesh segment 114.

The present disclosure allows for the creation of a high power liquid heater by using a resistive wire mesh element. The heater element can allow for a desired wavelength output by modifying both the thickness of the mesh as well as the surface area from which heat radiates. The heater includes a single unit mesh that is assembled into a liquid/water heater and having a low mass so as to allow for a very quick heat-up (on the order of less than a few seconds).

Wire mesh segment can include horizontal and vertical wires crisscrossing one another. The nodal intersections of the wires can form an electrical short. The wire mesh need not be electrically insulated. In some embodiments, the wire mesh includes an electrical insulator disposed thereupon. The wire mesh wire can include Nichrome.

In some embodiments, the wire mesh can include a hydrophilic coating in order to facilitate movement of heated water away from the wire mesh. A mesh design for operating a quick response time liquid heater can include of a nichrome wire mesh with strand diameter of 0.3 mm, and spacing between strands of 0.3 mm, and operating voltage of 24V. In some embodiments, the wire mesh can have a strand diameter of, for example, less than 1.5 mm, 1 mm, less than 0.7 mm, less than 0.5, less than 0.3 mm, less than 0.1 mm, or the like. In some embodiments, the spacing between strands can have a length of, for example, less than 1.5 mm, 1 mm, less than 0.7 mm, less than 0.5, less than 0.3 mm, less than 0.1 mm, or the like.

The wire mesh can include a wire mesh cloth that is, for example, calibrated for a fast response heating application operating. For example, the wire mesh can operate at 1400 degrees K or greater. In some embodiments, the wire mesh can attain a high temperature in, for example, less than 10 seconds, in less than 5 seconds, in less 2 seconds or the like.

The DC power supply can operate at, for example, 24 V or less, 12 V or less, 6 V or less, or the like.

A length L of the wire mesh can be, for example, less than 200 mm, less than 150 mm, less than 100 mm, less than 50 mm, or the like.

FIG. 6 illustrates a top down view of a liquid heater including a wire mesh heating element according to various embodiments.

FIG. 7 illustrates a bottom up view of a liquid heater including a wire mesh heating element according to various embodiments.

**Claims**

1. A liquid heater (100) comprising:

    a conduit (150);
    a circuit for carrying a DC current; and
    a wire mesh segment (114) disposed in the conduit and configured to receive the current and to heat a liquid flowing through voids in the wire mesh segment, **characterised in that** the wire mesh segment has a conically shaped surface:

        the wire mesh segment (114) comprises a broad ring (110) and a narrow ring (112), the broad ring being disposed upstream of the narrow ring along the flow of liquid; and
        the circuit comprises a first electrical lead (120) connected to the broad ring (110) and a second electrical lead (122) connected to the narrow ring (112).

2. The liquid heater (100) of claim 1 , wherein the DC current is supplied by a voltage source having a potential less than 24 Volts.

3. The liquid heater (100) of claim 1 or 2, wherein the wire mesh segment (114) comprises multiple wire mesh segments disposed in the conduit (150); and
is preferably electrically connected to a DC power supply in a parallel circuit.

4. The liquid heater (100) of claim 3, further comprising a relay for cycling the current connection to each of the multiple wire mesh segments, and a control circuit for controlling each of the relays.

5. The liquid heater (100) of claim 3 or 4, further comprising:
a control circuit for controlling current to each of the multiple wire mesh segments by cycling on and off at a duty ratio in response to a user input, or automatically in response to a measured parameter indicating a condition of a liquid.

6. The liquid heater (100) of claim 3, 4 or 5, further comprising a voltage control circuit configured for varying the voltage of each of the multiple wire mesh segments.

7. The liquid heater (100) of any preceding claim, wherein the conical surface comprises ridges and dips; and wherein the ridges and dips preferably form a sinusoidal shape.

8. The liquid heater (100) of any preceding claim, further comprising:

    a temperature sensor (124) to generate a liquid temperature signal; and
    a controller (129) to sense the liquid temperature signal, wherein the circuit for carrying the DC current is enabled when the liquid temperature signal indicates a temperature less than a desired temperature.

9. The liquid heater (100) of any preceding claim, further comprising:
a flow sensor (126) to generate a liquid flowing signal; and
a controller (129) to sense the liquid flowing signal, wherein the circuit for carrying the DC current is enabled when

the liquid temperature signal indicates liquid flow..

**10.** The liquid heater (100) of any preceding claim, wherein the wire mesh segment (114) comprises a wire mesh cloth comprising wire strands having a diameter less than 0.5 mm and a spacing between the wire strands of less than 0.5 mm;
wherein the wire strands preferably crisscross and form an electrical short at an intersection.

**11.** The liquid heater (100) of any preceding claim, wherein the wire mesh segment (114) comprises a hydrophilic coating.

**12.** A liquid heater kit comprising:

a DC power supply (128);
a first electrical lead (120) and a second electrical lead (122);
and
a wire mesh segment (114) configured to be disposed in a conduit and to receive a current from the DC power supply and to heat a liquid flowing through voids in the wire mesh segment, **characterised in that**
the wire mesh segment has a conically shaped surface and comprises a broad ring (110) and a narrow ring (112);
in use the broad ring (110) being disposed upstream of the narrow ring (112); and
the first electrical lead (120) is configured to be connected to the broad ring (110) and the second electrical lead (122) is configured to be connected to the narrow ring (112) to form a circuit with the DC power supply (128).

**13.** The liquid heater kit of claim 12, further comprising a conduit (150), wherein the wire mesh element (114) is disposed in the conduit.

**14.** The liquid heater kit of claim 12 or 13, further comprising a controller (129) and a temperature sensor (124).

**Patentansprüche**

**1.** Flüssigkeitserhitzer (100), umfassend:

eine Leitung (150);
eine Schaltung zum Führen eines Gleichstroms; und
ein Drahtgeflechtsegment (114), das in der Leitung angeordnet und konfiguriert ist, um den Strom zu erhalten und eine Flüssigkeit, die durch Leerräume in dem Drahtgeflechtsegment fließt, zu erhitzen,
**dadurch gekennzeichnet, dass**
das Drahtgeflechtsegment eine konusförmige Oberfläche aufweist;
wobei das Drahtgeflechtsegment (114) einen breiten Ring (110) und einen schmalen Ring (112) umfasst, wobei der breite Ring vor dem schmalen Ring entlang des Flüssigkeitsstroms angeordnet ist; und
die Schaltung ein erstes elektrisches Leitungskabel (120), das an den breiten Ring (110) angeschlossen ist, und ein zweites elektrisches Leitungskabel (122), das an den schmalen Ring (112) angeschlossen ist, umfasst.

**2.** Flüssigkeitserhitzer (100) nach Anspruch 1, wobei der Gleichstrom mittels einer Spannungsquelle gespeist wird, die ein Potenzial von weniger als 24 Volt aufweist.

**3.** Flüssigkeitserhitzer (100) nach Anspruch 1 oder 2, wobei das Drahtgeflechtsegment (114) mehrere Drahtgeflechtsegmente umfasst, die in der Leitung (150) angeordnet sind; und
bevorzugt elektrisch an einen Gleichstromanschluss in einer Parallelschaltung angeschlossen ist.

**4.** Flüssigkeitserhitzer (100) nach Anspruch 3, weiter umfassend ein Relais zum Ein- und Ausschalten der Stromverbindung an jedem der mehreren Drahtgeflechtsegmente und einen Regelkreis zum Regeln jedes der Relais.

**5.** Flüssigkeitserhitzer (100) nach Anspruch 3 oder 4, weiter umfassend:
einen Regelkreis zum Regeln von Strom an jedem der mehreren Drahtgeflechtsegmente mittels Ein- und Ausschalten bei einer relativen Einschaltdauer als Reaktion auf eine Benutzereingabe oder automatisch als Reaktion eines gemessenen Parameters, der auf einen Status einer Flüssigkeit hindeutet.

**6.** Flüssigkeitserhitzer (100) nach Anspruch 3, 4 oder 5, weiter umfassend einen Spannungsregelkreis, der zum Va-

rieren der Spannung von jedem der mehreren Drahtgeflechtsegmente konfiguriert ist.

**7.** Flüssigkeitserhitzer (100) nach einem der vorstehenden Ansprüche, wobei die konusförmige Oberfläche Rillen und Vertiefungen umfasst; und
wobei die Rillen und Vertiefungen bevorzugt eine sinusförmige Form bilden.

**8.** Flüssigkeitserhitzer (100) nach einem der vorstehenden Ansprüche, weiter umfassend:

einen Temperatursensor (124) zum Generieren eines Flüssigkeits-Temperatursignals; und
eine Steuerung (129) zur Erfassung des Flüssigkeits-Temperatursignals, wobei die Schaltung zum Führen des Gleichstroms aktiviert wird, wenn das Flüssigkeits-Temperatursignal auf eine Temperatur hindeutet, die geringer als eine gewünschte Temperatur ist.

**9.** Flüssigkeitserhitzer (100) nach einem der vorstehenden Ansprüche, weiter umfassend:

einen Durchflusssensor (126) zum Generieren eines Flüssigkeits-Durchflusssignals; und
eine Steuerung (129) zur Erfassung des Flüssigkeits-Durchflusssignals, wobei die Schaltung zum Führen des Gleichstroms aktiviert wird, wenn das Flüssigkeits-Temperatursignal auf einen Flüssigkeitsstrom hindeutet.

**10.** Flüssigkeitserhitzer (100) nach einem der vorstehenden Ansprüche, wobei das Drahtgeflechtsegment (114) ein Drahtgeflechttuch umfasst, das Drahtlitzen umfasst, die einen Durchmesser von weniger als 0,5 mm und einen Abstand zwischen den Drahtlitzen von weniger als 0,5 mm aufweisen;
wobei sich die Drahtlitzen bevorzugt kreuzen und einen elektrischen Kurzschluss an einer Kreuzung bilden.

**11.** Flüssigkeitserhitzer (100) nach einem der vorstehenden Ansprüche, wobei das Drahtgeflechtsegment (114) eine hydrophile Beschichtung aufweist.

**12.** Flüssigkeitserhitzer-Bausatz, umfassend:

einen Gleichstromanschluss (128);
ein erstes elektrisches Leitungskabel (120) und ein zweites elektrisches Leitungskabel (122);
und
ein Drahtgeflechtsegment (114), das konfiguriert ist, um in einer Leitung angeordnet zu sein und um Strom von dem Gleichstromanschluss zu erhalten und um eine Flüssigkeit zu erhitzen, die durch Leerräume in dem Drahtgeflechtsegment fließt, **dadurch gekennzeichnet, dass**
das Drahtgeflechtsegment eine konusförmige Oberfläche aufweist und einen breiten Ring (110) und einen schmalen Ring (112) umfasst;
wobei im Gebrauch der breite Ring (110) vor dem schmalen Ring (112) angeordnet ist; und
das erste elektrische Leitungskabel (120) konfiguriert ist, um an den breiten Ring (110) angeschlossen zu werden und das zweite elektrische Leitungskabel (122) konfiguriert ist, um an den schmalen Ring (112) angeschlossen zu werden, um mit dem Gleichstromanschluss (128) eine Schaltung zu bilden.

**13.** Flüssigkeitserhitzer-Bausatz nach Anspruch 12, weiter umfassend eine Leitung (150), wobei das Drahtgeflechtelement (114) in der Leitung angeordnet ist.

**14.** Flüssigkeitserhitzer-Bausatz nach Anspruch 12 oder 13, weiter umfassend eine Steuerung (129) und einen Temperatursensor (124).

## Revendications

**1.** Chauffage de liquide (100) comprenant :

une conduite (150) ;
un circuit pour transporter un courant continu ; et
un segment de treillis métallique (114) disposé dans la conduite et configuré pour recevoir le courant et pour chauffer un liquide s’écoulant à travers des mailles dans le segment de treillis métallique,
**caractérisé en ce que**

le segment de treillis métallique présente une surface de forme conique ;
le segment de treillis métallique (114) comprend une bague large (110) et une bague étroite (112), la bague large étant disposée en amont de la bague étroite dans le sens de l'écoulement de liquide ; et
le circuit comprend un premier conducteur électrique (120) connecté à la bague large (110) et un second conducteur électrique (122) connecté à la bague étroite (112).

**2.** Chauffage de liquide (100) selon la revendication 1, dans lequel le courant continu est délivré par une source de tension ayant un potentiel inférieur à 24 volts.

**3.** Chauffage de liquide (100) selon la revendication 1 ou 2, dans lequel le segment de treillis métallique (114) comprend de multiples segments de treillis métallique disposés dans la conduite (150) ; et
est de préférence connecté électriquement à une alimentation électrique en courant continu en un circuit parallèle.

**4.** Chauffage de liquide (100) selon la revendication 3, comprenant en outre un relais pour alterner par cycle la connexion de courant vers chacun des multiples segments de treillis métallique, et un circuit de commande pour commander chacun des relais.

**5.** Chauffage de liquide (100) selon la revendication 3 ou 4, comprenant en outre :

un circuit de commande pour commander le courant vers chacun des multiples segments de treillis métallique en alternant des cycles de marche et d'arrêt selon un facteur de marche en réponse à une entrée d'un utilisateur, ou automatiquement en réponse à un paramètre mesuré indiquant un état d'un liquide.

**6.** Chauffage de liquide (100) selon la revendication 3, 4 ou 5, comprenant en outre un circuit de commande de tension configuré pour faire varier la tension de chacun des multiples segments de treillis métallique.

**7.** Chauffage de liquide (100) selon une quelconque revendication précédente, dans lequel la surface conique comprend des crêtes et des creux ; et
dans lequel les crêtes et les creux forment de préférence une forme sinusoïdale.

**8.** Chauffage de liquide (100) selon une quelconque revendication précédente, comprenant en outre :

un capteur de température (124) pour générer un signal de température de liquide ; et
un contrôleur (129) pour détecter le signal de température de liquide, dans lequel le circuit pour transporter le courant continu est activé quand le signal de température de liquide indique une température inférieure à une température souhaitée.

**9.** Chauffage de liquide (100) selon une quelconque revendication précédente, comprenant en outre :

un capteur d'écoulement (126) pour générer un signal d'écoulement de liquide ; et
un contrôleur (129) pour détecter le signal d'écoulement de liquide, dans lequel le circuit pour transporter le courant continu est activé quand le signal de température de liquide indique un écoulement de liquide.

**10.** Chauffage de liquide (100) selon une quelconque revendication précédente, dans lequel le segment de treillis métallique (114) comprend une toile de treillis métallique comprenant des brins métalliques présentant un diamètre inférieur à 0,5 mm et un espacement entre les brins métalliques inférieur à 0,5 mm ;
dans lequel de préférence les brins métalliques s'entrecroisent et forment un court-circuit électrique à une intersection.

**11.** Chauffage de liquide (100) selon une quelconque revendication précédente, dans lequel le segment de treillis métallique (114) comprend un revêtement hydrophile.

**12.** Kit de chauffage de liquide comprenant :

une alimentation électrique en courant continu (128) ;
un premier conducteur électrique (120) et un second conducteur électrique (122) ;
et
un segment de treillis métallique (114) configuré pour être disposé dans une conduite et pour recevoir un courant

provenant de l'alimentation électrique en courant continu et pour chauffer un liquide s'écoulant à travers des mailles dans le segment de treillis métallique, **caractérisé en ce que**
le segment de treillis métallique présente une surface de forme conique et comprend une bague large (110) et une bague étroite (112) ;
la bague large (110) étant disposée en cours d'utilisation en amont de la bague étroite (112) ; et
le premier conducteur électrique (120) est configuré pour être connecté à la bague large (110) et le second conducteur électrique (122) est configuré pour être connecté à la bague étroite (112) de façon à former un circuit avec l'alimentation électrique en courant continu (128).

**13.** Kit de chauffage de liquide selon la revendication 12, comprenant en outre une conduite (150), dans lequel l'élément de treillis métallique (114) est disposé dans la conduite.

**14.** Kit de chauffage de liquide selon la revendication 12 ou 13, comprenant en outre un contrôleur (129) et un capteur de température (124).

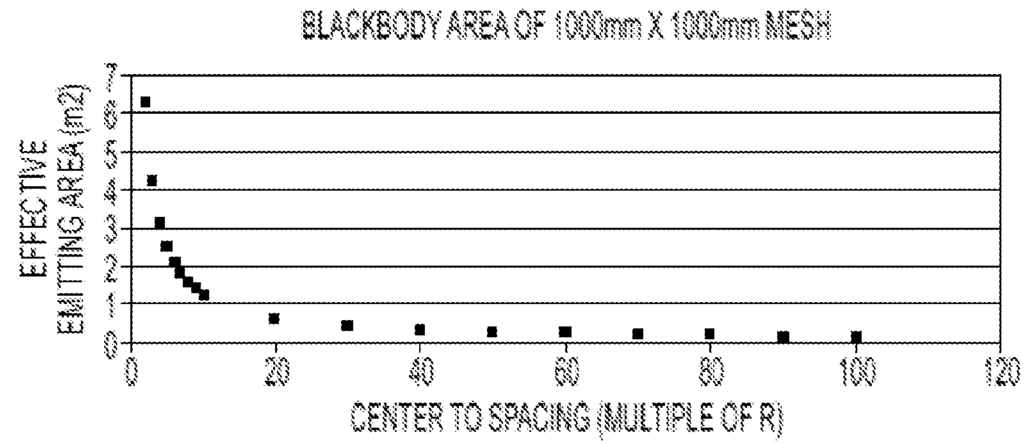
BLACKBODY AREA OF 1000mm X 1000mm MESH
EFFECTIVE EMITTING AREA (m2)
0
1
2
3
4
5
6
7
0
20
40
60
80
100
120
CENTER TO SPACING (MULTIPLE OF R)

FIG. 1

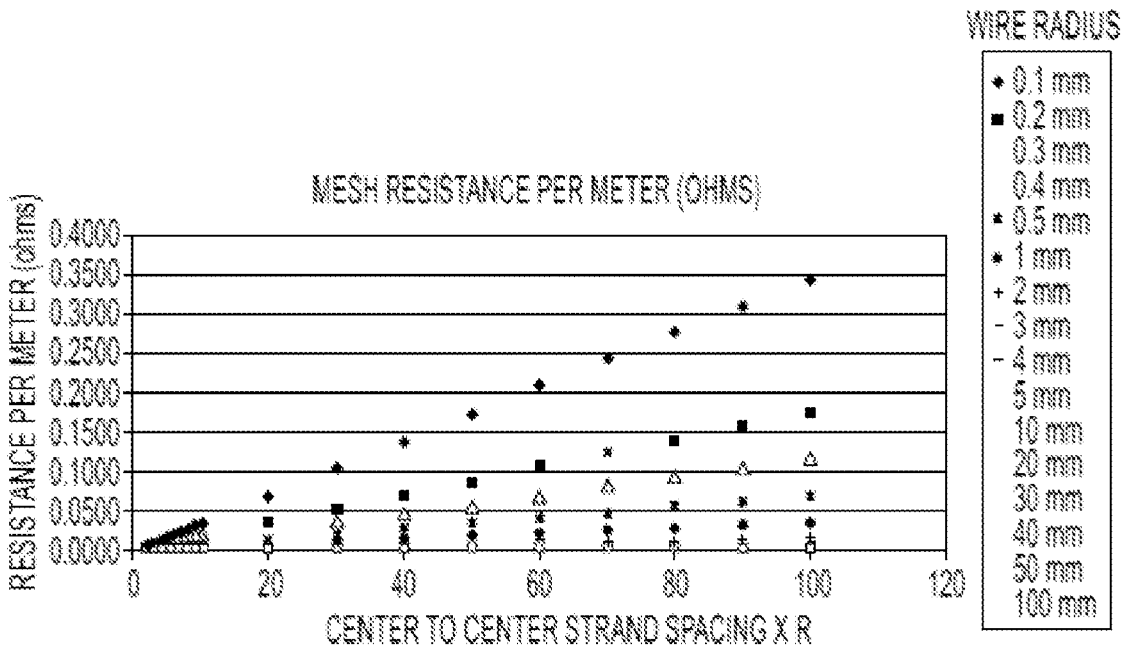
MESH RESISTANCE PER METER (OHMS)
RESISTANCE PER METER (ohms)
0.0000
0.0500
0.1000
0.1500
0.2000
0.2500
0.3000
0.3500
0.4000
0
20
40
60
80
100
120
CENTER TO CENTER STRAND SPACING X R
WIRE RADIUS
0.1 mm
0.2 mm
0.3 mm
0.4 mm
0.5 mm
1 mm
2 mm
3 mm
4 mm
5 mm
10 mm
20 mm
30 mm
40 mm
50 mm
100 mm

FIG. 2

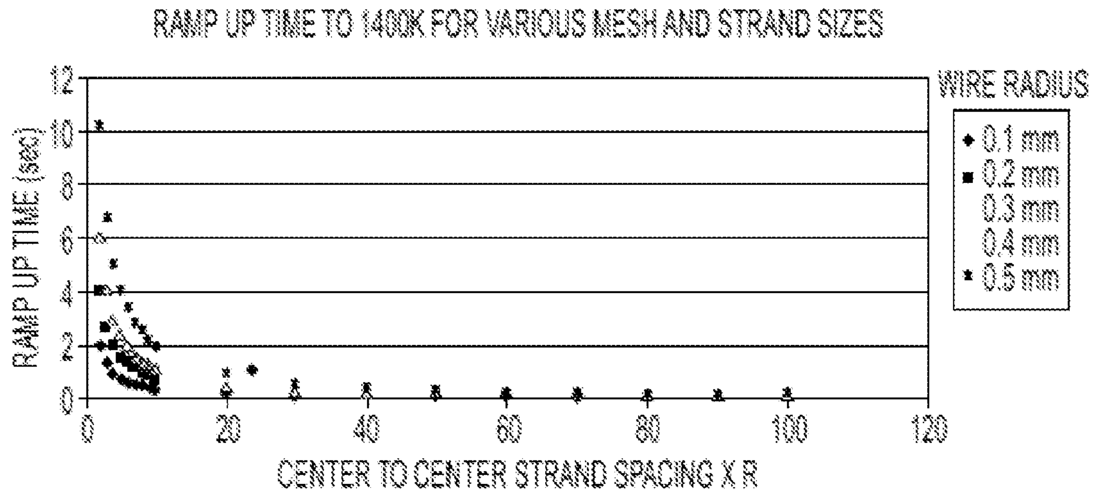
RAMP UP TIME TO 1400K FOR VARIOUS MESH AND STRAND SIZES
RAMP UP TIME (sec)
12
10
8
6
4
2
0
0
20
40
60
80
100
120
CENTER TO CENTER STRAND SPACING X R
WIRE RADIUS
0.1 mm
0.2 mm
0.3 mm
0.4 mm
0.5 mm

FIG. 3

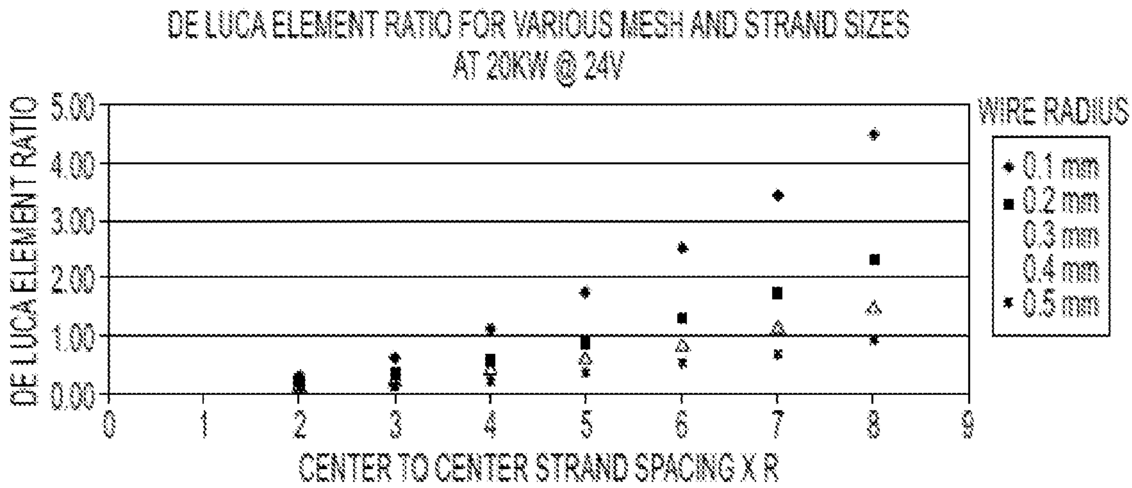
DE LUCA ELEMENT RATIO FOR VARIOUS MESH AND STRAND SIZES
AT 20KW @ 24V
DE LUCA ELEMENT RATIO
5.00
4.00
3.00
2.00
1.00
0.00
0
1
2
3
4
5
6
7
8
9
CENTER TO CENTER STRAND SPACING X R
WIRE RADIUS
0.1 mm
0.2 mm
0.3 mm
0.4 mm
0.5 mm

FIG. 4

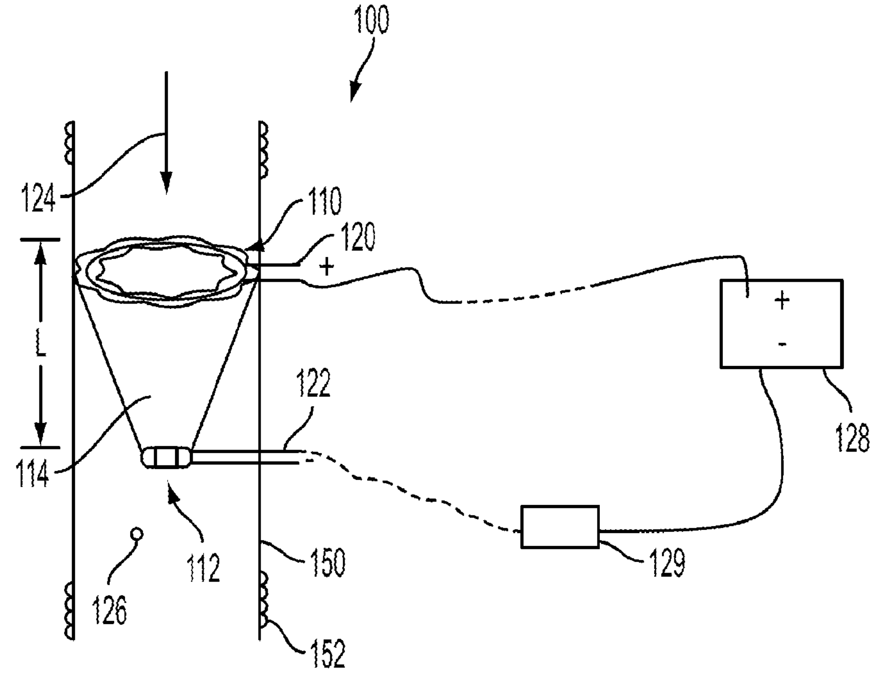
100
124
110
120
+
+
-
L
122
128
114
112
129
150
126
152

FIG. 5

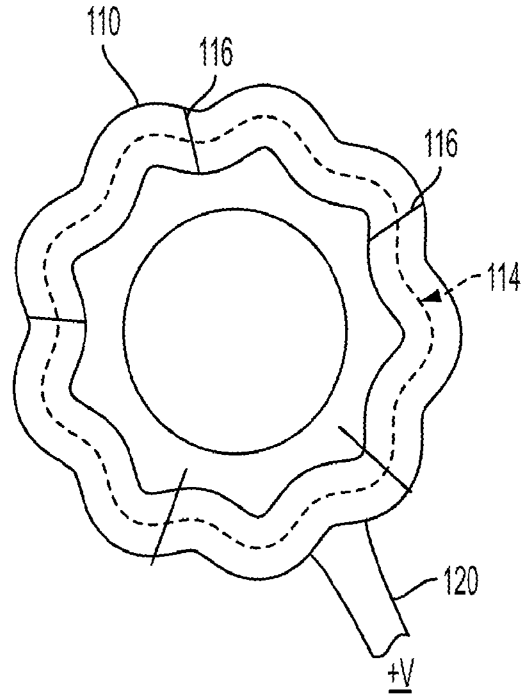
110
116
116
114
120
+V

FIG. 6

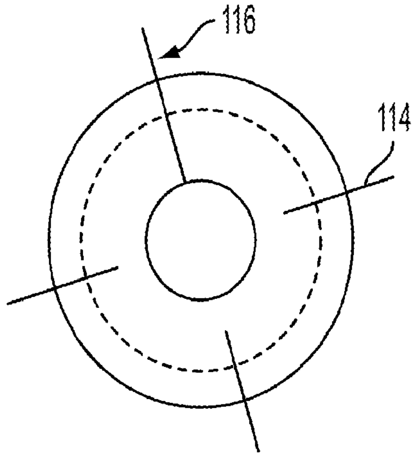


FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- AU 2321370
- US 2748253 A
- DE 7820070
- US 6181874 B